# EUROPEAN PATENT APPLICATION

(11) **EP 4 818 270 A1**
(43) Date of publication of application: **07.10.2026**
(21) Application number: 25167506.2
(22) Date of filing: 31.03.2025
(51) Int. Cl.: C09D 5/00, C04B 41/48, C09D 7/62, C09D 7/63, C09D 7/65, C09D 7/40, C09D 163/00, C09K 3/00, B05D 5/00, C08L 91/00

(54) **PIGMENTED SELF-HEALING COATING COMPOSITIONS**

(71) Applicant: Sika Technology AG, 6340 Baar (CH)
(72) Inventor: THAKKAR, Jigneshkumar Dineshbhai, 126212 Dubai (AE)
(74) Representative: Sika Patent Attorneys

(57) **Abstract**

The invention is directed to a pigmented self-healing coating composition comprising polyurea microcapsules with a core having an inorganic porous material impregnated with vegetable oil. This inventive coating composition is designed to offer enhanced protective properties and self-repair capabilities for various substrates, especially concrete and steel. The invention further relates to a coated substrate, a method for self-healing said substrate, and the use of the self-healing composition to self-repair damages on the surface of the coated substrate. Described is also the process for synthesis of polyurea microcapsules for use in pigmented self-healing coating compositions, especially epoxy and epoxy-sulphide based coating compositions.

## Description

### Technical field

The present invention pertains to abrasion-resistant self-healing coating compositions specifically designed for use on concrete, steel, and similar substrates. In particular, the present invention relates to a pigmented self-healing coating composition that comprises polyurea microcapsules encapsulating inorganic porous material impregnated with vegetable oil.

### Background of the invention

The degradation of protective coatings due to environmental exposure, mechanical wear, and chemical attack is a significant concern in various industries, including construction, automotive, and marine applications. Conventional coatings often require frequent maintenance and reapplication, leading to increased costs and material consumption. To address these challenges, self-healing coatings have emerged as an innovative solution capable of extending service life and reducing maintenance requirements.

Self-healing coatings typically incorporate microcapsules containing healing agents that are released upon damage to the coating matrix. These microcapsules rupture when cracks or defects occur, allowing the healing agent to flow into the damaged region and restore the protective barrier. Among the various self-healing systems, polyurea (PU) based microcapsules have garnered significant interest due to their excellent mechanical properties, chemical resistance, and rapid reaction kinetics.

A key factor influencing the performance of self-healing coatings is the selection of an effective core material within the microcapsules. Traditional healing agents, such as epoxy or polyurethane precursors, can sometimes suffer from limited reactivity or compatibility with diverse coating formulations. Using vegetable oil as a healing agent in the core of self-healing coatings is an innovative and sustainable approach for protecting concrete and steel surfaces. The mechanism relies on encapsulating vegetable oil within microcapsules or integrating it into a vascular network within the coating matrix. When a crack forms, these capsules rupture, releasing the oil into the damaged area. The oil then spreads and either polymerizes through oxidation or forms a hydrophobic barrier, effectively sealing the crack and preventing further deterioration.

One of the key advantages of using vegetable oil is its eco-friendliness compared to synthetic healing agents. It also enhances the coating's hydrophobic properties, reducing water penetration and corrosion risk. Certain vegetable oils, such as linseed, soybean, tung, and castor oil, offer additional benefits like polymerization, biodegradability, and non-toxicity, making them suitable for various self-healing applications. For instance, linseed oil is widely known for its drying properties, making it ideal for coatings, while soybean and tung oils provide enhanced waterproofing and structural integrity over time.

Controlling the release of the healing agent, such as vegetable oil, from microcapsules is essential for the effectiveness of self-healing coatings. To overcome this challenge, porous inorganic materials like fly ash are often used as absorbent carriers for healing agents. The porous nature of fly ash enables the retention and gradual release of vegetable oil, minimizing premature leakage and enhancing crack-sealing efficiency.

Non-pigmented or clear self-healing coatings have been widely developed and commercialized due to their ability to maintain the aesthetic appearance of underlying substrates. These coatings typically rely on transparent polymer matrices that can reform or reflow upon damage, facilitated by mechanisms such as microencapsulated healing agents, supramolecular interactions, or thermally activated polymers. However, while clear self-healing coatings effectively restore minor surface damage, their applicability in functional and decorative coatings is limited, particularly in industries requiring enhanced opacity, UV resistance, and aesthetic color matching.

Pigmented self-healing coatings address these limitations by incorporating pigments and/or fillers into the self-healing coating matrix. The addition of pigments offers improved visual appeal, UV stability, and corrosion resistance, making them more suitable for architectural, industrial, and protective applications. However, the presence of pigments and fillers introduces challenges in maintaining the self-healing efficiency. Pigments may alter the viscosity, diffusion characteristics, and reactivity of healing agents, potentially reducing the effectiveness of damage repair. Furthermore, achieving uniform dispersion of self-healing agents within a pigmented system requires careful formulation strategies to balance color stability, mechanical durability, and healing performance.

The development of pigmented self-healing coatings, especially using polyurea microcapsules presents additional challenges compared to clear or non-pigmented self-healing coatings. The presence of pigments and additional fillers interfere with the dispersion and stability of polyurea microcapsules within the coating matrix, affecting their integrity and self-healing efficiency. Moreover, pigment particles impact the release mechanism of the healing agent, making it more difficult to achieve consistent and reliable self-healing performance. Overcoming these challenges requires careful formulation and optimization to ensure that the pigmented coating maintains both its aesthetic appeal and functional properties.

In light of the current state of the art, it is highly desirable to manufacture novel pigmented self-healing coating compositions, which addresses many of the shortcomings of existing coating compositions. In particular, the present invention is directed towards design and development of formulations and methodologies that enhance the self-healing capability of pigmented coatings based on polyurea microcapsules.

### Summary of the invention

The object of the present invention is to provide improved self-healing coating compositions. In particular, the present invention provides new improved pigmented self-healing coating composition that comprises polyurea microcapsules encapsulating inorganic porous material impregnating vegetable oil. More particularly, the present invention provides new improved pigmented self-healing coating composition that comprises polyurea microcapsules encapsulating calcined fly ash (CFA) absorbing linseed oil (CFA-oil).

The subject of the present invention is a composition as defined in claim 1.

It was surprisingly found out that the disadvantages related to the prior art solutions can be solved or at least partially mitigated by using the claimed self-healing coating composition of the present invention. The present invention provides a new improved coating composition with excellent self-healing properties.

Other aspects of the present invention are presented in other independent claims. Preferred embodiments of the invention are presented in the dependent claims.

### Brief description of the Drawing

Fig. 1 illustrates photographic image of dried filtered polyurea microcapsules encapsulating calcined fly ash absorbing linseed oil (MC).
Fig. 2 illustrates SEM images of polyurea microcapsules encapsulating calcined fly ash absorbing linseed oil (MC).
Fig. 3(a) illustrates optical microscope images of polyurea microcapsules encapsulating calcined fly ash absorbing linseed oil (MC) prepared as per the present invention (i.e. with slow mechanical agitation or lower speed).
Fig. 3(b) illustrates optical microscope images of polyurea microcapsules encapsulating calcined fly ash absorbing linseed oil prepared not according to present invention (i.e. with fast mechanical agitation or higher speed).
Fig. 4(a) illustrate particle size distribution of calcined fly ash (CFA) and polyurea microcapsules encapsulating calcined fly ash absorbing linseed oil (MC).
Fig. 4(b) illustrates cumulative particles size analysis of calcined fly ash (CFA) and polyurea microcapsules encapsulating calcined fly ash absorbing linseed oil (MC).
Fig. 5 illustrates FTIR spectra of a) linseed oil, b) calcined fly ash (CFA), and c) polyurea microcapsules encapsulating calcined fly ash absorbing linseed oil (MC).
Fig. 6 illustrates Differential scanning calorimetry (DSC) analysis of a) linseed oil, b) calcined fly ash (CFA), and c) polyurea microcapsules encapsulating calcined fly ash absorbing linseed oil (MC).
Fig. 7 illustrates contact angle of coating samples (a) STD, b) CFA 870 and c) MC 870.
Fig. 8 illustrates photographic images of coated concrete samples (a) STD (b) CFA435 (c) CFA870 (d) MC435 and (e) MC870 with scribed surfaces.
Fig. 9 illustrates photographic images of coated concrete samples (a) MC435 and (b) MC870 with scribed surfaces.
Fig. 10 illustrate magnified photographic image of a concrete sample prepared with the coating sample MC430, in which a crack has been initiated (FIG. 10a), in which the crack has been subjected to healing conditions (FIG. 10b).
Fig. 11 illustrate magnified photographic image of a concrete sample prepared with the coating sample MC870, in which a crack has been initiated (FIG. 11a), in which the crack has been subjected to healing conditions (FIG. 11b).
Fig. 12 illustrate photographic image of crack healed concrete samples prepared with the coating sample (a) STD1817 (b) MC100 and (c) MC200.

### Detailed description of the invention

The subject of the present invention is a self-healing coating composition, comprising:
a. polyurea microcapsules, wherein the polyurea microcapsule comprises:
   i. a core material comprising an inorganic porous material impregnated with at least one healing agent, wherein the healing agent comprises at least one vegetable oil, preferably linseed oil; and
   ii. a polyurea shell encapsulating the core material; and
b. a coating matrix embedding the polyurea microcapsules, wherein the coating matrix comprises at least one curable resin, and wherein the self-healing coating composition is pigmented.

### Definitions

The recitation of a numerical range using endpoints includes all numbers subsumed within that range (e.g., 1 to 5 includes 1, 1.5, 2, 2.75, 3, 3.80, 4, 5, etc.).

The terms "a," "an," "the," "at least one," and "one or more" are used interchangeably. Thus, for example, a coating composition that contains "an" additive means that the coating composition includes "one or more" additives.

The term "cementitious" refers to a substrate or material that comprises cement and has the properties or characteristics of cement, or that comprises a chemical precipitate, preferably of carbonates, having the characteristics of cement. Examples of cementitious substrates and materials include cement, burnished cement, concrete, polished concrete and cement fiberboard, and examples of places or applications where cementitious substrates may be employed include floors (e.g., garage floors), tiles (e.g., floor tiles), decks, boards and panels (e.g., fiber cement boards), and the like.

The term "coating" pertains to a layer of material that is applied to the surface of an object, often referred to as a substrate, to protect, enhance, or modify its surface properties. Coatings can serve various functions, such as providing corrosion resistance, improving aesthetic appearance, offering wear resistance, reducing friction, or imparting specific electrical, thermal, or chemical characteristics. Coatings can be made from a wide range of materials, including paints, polymers, metals, ceramics, and composites, and can be applied through different methods such as spraying, dipping, brushing, or electroplating. The choice of coating material and application method depends on the intended function, the properties of the substrate, and the environmental conditions to which the coated object will be exposed. A coating composition is a composition that will form a coating when it is contacted with a substrate and solidified/cured.

The term "coating matrix" refers to the structural framework of a coating system that holds and distributes various components, such as binders, pigments, additives, and fillers, within a coating formulation.

The term "comprises" and variations thereof does not have a limiting meaning where such term appears in the description or claims. For instance, a composition comprising an ethylenically unsaturated compound means that the composition includes one or more ethylenically unsaturated compounds.

The term "Concrete" is used to designate a mixture of hydraulic cement, aggregate and water, which sets to form a hardened mass. Concrete may contain either mineral or non-mineral aggregate, including naturally occurring materials, for instance, sand and gravel or quarried rock, or manufactured aggregate, such as expanded shale, clay or the like.

In the context of the present invention, the terms "scribe," "crack," "micro-crack," and "scratch" refer to different types of surface imperfections or damages that may occur on materials or coatings. In the context of coatings, the term "scribe" refers to a deliberate line or incision made through the coating layer to expose the underlying material. This is often done to test the coating's adhesion, durability, or resistance to corrosion. By creating a scribe, the performance of the coating can be evaluated under specific conditions, such as exposure to corrosive environments or mechanical stress, to see how well the coating protects the underlying substrate. The term "crack" in the context of present invention relates to a visible break or split in the coating layer that can compromise its protective properties. In contrast, a "micro-crack" refers to a much smaller, often microscopic fissure, generally caused by minor stresses or environmental factors, and though not visible to the naked eye, it can potentially propagate into larger cracks over time. The term "scratch" in the context of present invention relates to a shallow, linear abrasion on the surface of the coating that can reduce its effectiveness and potentially expose the underlying material to damage. A scratch typically affects only the surface layer, creating a visible mark or groove. Despite its relatively minor appearance compared to deeper damage, a scratch can still lead to problems such as corrosion or deterioration if it breaks through protective layers. In the context of the present invention the terms "scribe", "crack", "micro-crack", and "scratch" are used interchangeably to depict surface defects on a coated substrate.

The term "mean particle size" preferably refers to the D (0.5) value from the cumulative volume distribution curve, indicating that 50% by volume of the particles have a size smaller than this value. The mean particle size, or D (0.5) value, is preferably measured using laser diffractometry.

The terms "preferred" and "preferably" refer to embodiments which may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

The term "polymer" refers to a substance containing more than 100 repeat units. The term "polymer" includes soluble and/or fusible molecules having long chains of repeat units and also includes insoluble and infusible networks. A prepolymer is a substance containing less than 100 repeat units and that can undergo further reaction to form a polymer.

Substance names beginning with "poly", such as polyamine or polyepoxide, refer to substances containing, in a formal sense, two or more of the functional groups that occur in their name per molecule.

Room temperature" refers to a temperature of 23°C.

The term "self-healing" in the context of the present invention refers to the ability of a material or coating to repair damage, such as cracks, micro-cracks or scratches, with or without external intervention. This self-repairing capability ensures that the material maintains its protective properties and structural integrity over time, even after being subjected to mechanical stress or environmental degradation. The self-healing process can be triggered by various mechanisms, such as the release of healing agents from microcapsules embedded in the coating, the reformation of dynamic covalent bonds, or the interaction of functional groups like hydrogen bonds. This feature is particularly advantageous in coatings used to protect substrates, as it prolongs their lifespan, reduces maintenance costs, and ensures continuous protection against corrosion, moisture, ultraviolet radiation, and other damaging factors.

The term "autonomic self-healing material" refers to automatically (without human or electronic control intervention) stopping, starting and adapting operation of the self-healing material depending on environmental or physical stimuli. The objective of the self-healing material is to return undamaged functionality to the environmentally or physically damaged material without humans needing to know the damage ever occurred. For example, when environmental or physical stimuli damage the material so as to rupture the described microcapsules contained therein, the capsule core composition releases in and/or around the area that is damaged, and autonomic self-healing can be achieved.

The term "capsule" means a closed object or a shell having a capsule wall enclosing an interior volume that may contain a solid, liquid, gas or a combination thereof, and having an aspect ratio of about 1:1 to about 1:10. The aspect ratio of an object is the ratio of the shortest axis to the longest axis, where the axes need not be perpendicular. A capsule may have any shape that falls within this aspect ratio, such as a sphere, a toroid or an irregular amoeboid shape. The surface of a capsule may have any texture, for example, rough or smooth.

The term "microcapsule" refers to a small, encapsulated structure containing an active ingredient or core material, surrounded by a protective shell or coating. This encapsulation serves to control the release, protect the core material, or modify its interaction with the surrounding environment. In the context of a self-healing coating composition, the term "microcapsule" refers to a microscopic or sub-millimeter-sized structure that encapsulates a healing agent, which is released upon coating damage to autonomously repair cracks or defects. The term "polyurea microcapsule", in the context of a self-healing coating composition, refers to a microcapsule with a polyurea-based shell that encapsulates a healing agent. These microcapsules are designed to rupture upon damage, releasing the healing agent to repair cracks or defects in the coating. The aspect ratio of a microcapsule, similar to that of a regular capsule, typically ranges from approximately 1:1 to 1:10. Essentially, a microcapsule is just a smaller version of a capsule.

The term "healing agent" refers to a reactive substance incorporated into a self-healing coating composition that is designed to be released upon damage, enabling the repair of cracks, scratches, or defects.

The term "pigment" refers to a finely ground, insoluble substance that imparts color to a material by selectively absorbing and reflecting light. Unlike dyes, pigments generally do not dissolve in the medium but remain suspended, providing opacity, color stability, and durability.

The term "pigmented self-healing coating composition" in the context of the present invention relates to a protective coating system that incorporates pigments for color, opacity, and functional properties, along with self-healing agents that enable autonomous repair of damage such as cracks or scratches.

The term "filler" refers to materials that are incorporated into the coating formulation to enhance specific properties such as strength, durability, and functionality. In the context of the present invention, the fillers may also assist in the healing process when the coating is damaged.

Unless defined otherwise, all technical and scientific terms used herein have the same meaning as commonly understood by those of ordinary skill in the art.

As set forth above, there is pressing need to develop improved pigmented self-healing coating compositions. Disclosed herein are new improved abrasion resistant, self-healing coating compositions and methods thereof.

The claimed composition of the present invention has proven particularly effective for coating surfaces such as concrete or steel, those skilled in the art can appreciate that the inventive composition can be used in a variety of different applications and in a variety of different areas of manufacture to yield self-healing coated surfaces. Representative examples include commercial restaurant dining areas, interior and limited UV Resistance exterior flooring, stamped concrete, stamped or textured cementitious overlays, concrete countertops, vertical concrete applications, concrete building exteriors, statuary, hotel and lobby areas, and any other concrete surfaces subjected to harsh conditions, whether on new or existing concrete.

The claimed compositions may be applied to a variety of substrates, especially cementitious substrates, including concrete, cement, cement tiles, and fiber cement substrates. The compositions are particularly useful for coating cementitious substrates including concrete, cement floors and fiber cement articles. The claimed coating composition can also be utilized for non-cementitious substrates as well. Some of the representative examples of suitable non-cementitious substrates include, but are not limited to, wood (such as marine plywood or oriented strand board), metal (such as steel), or synthetic materials (such as insulation boards or composite panels) etc.

### Polyurea Microcapsule

The claimed self-healing coating composition comprises polyurea microcapsules. In particular, the present invention provides a self-healing coating composition designed to enhance the durability, longevity, and protective performance of coated surfaces by incorporating polyurea microcapsules that facilitate autonomous repair upon damage.

The polyurea microcapsule serves as the primary functional component responsible for enabling the self-healing mechanism. It comprises a polyurea shell encapsulating a core material. The core material comprises an inorganic porous material impregnated with at least one healing agent. The polyurea microcapsules are incorporated into a coating matrix. These microcapsules are designed to remain stable within the coating matrix under normal conditions but rupture upon exposure to mechanical stress, impact, or environmental degradation. The rupture of the microcapsules triggers the release of the encapsulated healing agent, which spreads into cracks or damaged regions, thereby restoring the integrity of the coating and preventing further deterioration.

The incorporation of polyurea microcapsules enhances the overall performance of the coating by providing extended service life, improved resistance to environmental stressors such as moisture and UV radiation, and reduced maintenance requirements.

Preferably, the polyurea microcapsules has mean particle size in the range in the range of 0.1-100 microns, preferably 5-85 microns, more preferably 1-30 microns, wherein the mean particle size is preferably determined by laser diffractometry.

Preferably, the weight percentage of the polyurea microcapsules with respect to the total weight of the self-healing coating composition is about 0.1-50%, preferably 0.5-35%, more preferably 1-20%, even more preferably 3-10%.

### Inorganic Porous Material:

The core of the polyurea microcapsules comprises an inorganic porous material, which serves as a carrier for the healing agent, ensuring its controlled retention and release. The inorganic porous material is impregnated with at least one healing agent, wherein the healing agent comprises, preferably consists of, at least one vegetable oil, preferably linseed oil, which acts as the healing agent responsible for facilitating the self-repair mechanism.

Preferably, the inorganic porous material is fly-ash, preferably calcined fly-ash.

Fly ash, a byproduct of coal combustion in thermal power plants, is fine powder rich in silica, alumina, and other oxides. Its porous nature allows for efficient impregnation with healing agents. Further, it ensures controlled storage and release of the healing agent upon rupture of the microcapsule.

Calcined fly ash is obtained by subjecting raw fly ash to high temperatures treatment. The calcination process typically removes residual carbon content, enhances the surface area, and increases the material's adsorption capacity. Additionally, calcined fly ash exhibits enhanced chemical stability and reduced impurities, making it more effective in self-healing applications.

The calcination of fly ash is preferably performed at a temperature in the range of 600-1000°C, more preferably 700-900°C, even more preferably at 750-850°C.

### Healing agent - Vegetable Oil

The self-healing coating composition of the present invention utilizes vegetable oil as the healing agent. The healing agent is preferably impregnated into the inorganic porous carrier for controlled release.

Preferably, the vegetable oil is selected from the group consisting of linseed oil, soybean oil, castor oil, tung oil, cottonseed oil, safflower oil, sunflower oil, corn oil, peanut oil, canola oil, coconut oil, palm oil, olive oil and rapeseed oil, preferably linseed oil.

Preferably, the weight ratio of healing agent and CFA (healing agent / CFA) within the polyurea microcapsule is 0.01 - 10, preferably 0.2 -1.5, more preferably 0.4 - 1.25, most preferably 0.9 - 1.1. The amount or weight ratio of polyurea microcapsule used is in the range of 0-30 wt%, preferably 1-20 wt %, more preferably 1-10 wt %, even more preferably 3-10 wt%, based on overall self-healing coating compositions. These preferred concentrations are selected to achieve the desired healing efficiency, optimize the coating formulation, and meet specific application requirements. Within these ranges, healing agent effectively impregnates the porous carrier, facilitates controlled release upon crack formation, and undergoes efficient polymerization to restore the coating's integrity.

Linseed oil preferably act as a healing agent in self-healing coatings due to its ability to polymerize upon exposure to air. It forms a protective film that restores cracks and prevents further damage. Its high oxidation reactivity allows it to solidify and seal microcracks, enhancing the longevity and durability of coatings. Additionally, linseed oil's natural compatibility with various coating formulations and its environmentally friendly nature makes it a preferred choice for sustainable self-healing applications.

In a particularly preferred embodiment, the core material comprises calcined fly ash as inorganic porous material and linseed oil as healing agent.

### Curable Resin

The claimed self-healing coating composition of the present invention comprises a coating matrix that embeds the polyurea microcapsules. The coating matrix comprises at least one curable resin.

Preferably, the curable resin is selected from the group consisting of an epoxy resin, a polysulphide resin, an epoxy-polysulphide resin, an acrylic resin, a phenolic resin, a polyurethane resin, an alkyd resin and a polyester resin, preferably selected from an epoxy resin and an epoxy-polysulphide resin.

More preferably, the curable resin is selected from an epoxy resin and/or an epoxy-polysulphide resin. Even more preferably, the curable resin is an epoxy resin.

Suitable epoxy resins are standard industrial epoxy resins. These are obtained in a known manner, for example from the oxidation of the corresponding olefins or from the reaction of epichlorohydrin with the corresponding polyols, polyphenols or amines.

Particularly suitable epoxy resins are what are called liquid polyepoxide resins, referred to as "liquid resin" hereinafter. These have a glass transition temperature below 25° C.

Likewise, possible as epoxy resins are what are called solid resins which have a glass transition temperature above 25° C. and can be comminuted to powders that are pourable at 25° C.

Suitable epoxy resins are especially aromatic epoxy resins, especially the glycidylization products of:
- bisphenol A, bisphenol F or bisphenol A/F, where A stands for acetone and F for formaldehyde, which served as reactants for preparation of these bisphenols. In the case of bisphenol F, positional isomers may also be present, especially derived from 2,4'- or 2,2'-hydroxyphenylmethane.
- dihydroxybenzene derivatives such as resorcinol, hydroquinone or catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether or bis(4-hydroxyphenyl) sulfone;
- condensation products of phenols with formaldehyde that are obtained under acidic conditions, such as phenol novolacs or cresol novolacs, also called bisphenol F novolacs;
- aromatic amines such as aniline, toluidine, 4-aminophenol, 4,4'-methylenediphenyldiamine, 4,4'-methylenediphenyldi(N-methyl)amine, 4,4'-[1,4-phenylenebis(1-methylethylidene)]bisaniline (bisaniline P) or 4,4'-[1,3-phenylenebis(1-methylethylidene)]bisaniline (bisaniline M).

Further suitable epoxy resins are aliphatic or cycloaliphatic polyepoxides, especially
- glycidyl ethers of saturated or unsaturated, branched or unbranched, cyclic or open-chain di-, tri- or tetrafunctional C2 to C30 alcohols, especially ethylene glycol, propylene glycol, butylene glycol, hexanediol, octanediol, polypropylene glycols, dimethylolcyclohexane, neopentyl glycol, dibromoneopentyl glycol, castor oil, trimethylolpropane, trimethylolethane, pentaerythritol, sorbitol or glycerol, or alkoxylated glycerol or alkoxylated trimethylolpropane;
- a hydrogenated bisphenol A, F or A/F liquid resin, or the glycidylization products of hydrogenated bisphenol A, F or A/F;
- an N-glycidyl derivative of amides or heterocyclic nitrogen bases, such as triglycidyl cyanurate or triglycidyl isocyanurate, or reaction products of epichlorohydrin with hydantoin.
- epoxy resins from the oxidation of olefins such as, in particular, vinylcylohexene, dicyclopentadiene, cyclohexadiene, cyclododecadiene, cyclododecatriene, isoprene, 1,5-hexadiene, butadiene, polybutadiene or divinylbenzene.

A preferred epoxy resin is a liquid resin.

Particularly preferred as epoxy resin is a liquid resin based on a bisphenol. Most preferred as epoxy resin is a liquid resin based on a diglycidyl ether of bisphenol A, of bisphenol F or of bisphenol A/F, of the kind commercially available, for example, from Dow, Huntsman, Aditya Birla or Momentive. These epoxy resins have readily manageable viscosity and enable high strengths and resistances. Such liquid resins may also include fractions of solid bisphenol A resin or phenol novolacs.

In a particularly preferred embodiment, the epoxy resin is an epoxy resin A having more than one epoxy group per molecule on average.

Preferably, the epoxy resin A is selected from the group consisting of at least one bisphenol A epoxy resin, bisphenol F epoxy resin, novolac epoxy resin, aliphatic epoxy resin, cycloaliphatic epoxy resin, glycidylamine epoxy resin, or a combination thereof.

The composition preferably has an epoxy resin content in the range from 25 to 85 weight %, more preferably 25 to 75 weight %, more particularly 28 to 38 weight %, based on the total weight of the self-healing coating composition.

In another embodiment of the invention, the curable resin of the coating matrix is an epoxy-polysulphide based resin.

The epoxy-polysulfide resin comprises at least one polysulfide resin and an epoxy resin. The epoxy resin suitable for preparing the epoxy-polysulfide curable resin is as defined above. Preferably, the polysulfide resin is selected from the group consisting of at least one aliphatic polysulfide, an aromatic polysulfide, a thiol-terminated polysulfide, a mercaptan-terminated polysulfide, and mixtures thereof.

Suitable examples of the commercially available epoxy-polysulfide coating compositions which can be used in the present invention are, but are not limited to, PPG PSX^{®} 700 (PPG Industries Inc.), Araldite^{®} Epoxy-Polysulfide Coatings (Huntsman Advanced Materials), Flexicoat Epoxy-Polysulfide Coatings (Sherwin-Williams), Carboguard Epoxy-Polysulfide Coatings (RPM International Inc. Carboline), Sikagard^{®} Epoxy-Polysulfide Coatings (Sika), AMI Epoxy-Polysulfide Coatings (Autonomic Materials, Inc.), Sikagard range of coatings (Sika UAE LLC), ChemLine^{®} Self-Healing Coatings (Advanced Polymer Coatings), NANOMYTE^{®} MEND (NEI Corporation). Particularly preferred commercially available epoxy-polysulfide coating compositions are Sikagard^{®} Epoxy-Polysulfide Coatings (Sika) and Sikagard range of coatings (Sika UAE LLC),

### Pigment

Pigments are used in self-healing coatings to provide color, opacity, UV resistance, and enhanced durability. They provide both aesthetic and protective functions. They help improve the coating's mechanical properties and shield the underlying substrate from environmental degradation. Additionally, certain functional pigments can contribute to corrosion resistance and thermal stability. However, adding pigments to self-healing coatings poses challenges, including the risk of disrupting the self-healing mechanism. These challenges are even more significant in concrete coatings. High pigment loading can alter the coating matrix's viscosity, affecting the dispersion and release of healing agents from microcapsules. Additionally, pigments may interact chemically with the healing agent, reducing its effectiveness. Achieving a balance between pigmentation and self-healing efficiency requires careful formulation and selection of compatible materials.

The coating matrix of the self-healing coating composition of the present invention is pigmented. Accordingly, coating matrix includes one or more pigments and/or fillers along with the other components. Preferably, the curable resin constituting the coating matrix of the self-healing coating composition contains one or more pigments and/or fillers.

Particularly, preferred pigments include titanium dioxide or iron oxide. Suitable examples of commercially available pigments include, but are not limited to, titanium dioxide from suppliers such as Crystal, Kronos, and DuPont, as well as iron oxide from Cathay Industries and LANXESS.

In a preferred embodiment the coating matrix includes pigments in the form of a pigmented paste.

The term "pigmented paste" refers to a semi-solid formulation composed of pigments finely dispersed in a carrier medium. The carrier medium in the paste helps in easy dispersion and application of the pigments into the desired product or system.

Pigmented pastes are often preferred for their high pigment concentration, ease of handling, and ability to ensure consistent color quality in final products. They can be customized based on the required properties of the final product, such as viscosity, drying time, and durability.

Representative examples of the commercially available pigments which can be used in the present invention are Crystal 121, Kronos Titanium dioxide, Dupont R902, Iron oxide from Cathay Industries Black BA33, LANXESS Red 110M, Black 318M. Yellow C920.

Preferably, the self-healing coating composition further comprises one or more materials selected from the group consisting of a curing agent, an additive, an adhesion promoter, and an accelerator.

### Adhesion Promoter

The self-healing coating composition preferably includes at least one adhesion promoter, preferably a silane adhesion promoter.

Suitable examples of the adhesion promoters which can be used in the present invention include, but are not limited to, aminosilanes having secondary amino groups, such as, in particular, N-phenyl-aminosilanes, N-cyclohexyl-aminosilanes or N-alkyl-aminosilanes, epoxysilanes, such as, in particular, 3-glycidoxypropyltrimethoxysilane, (meth) acrylsilanes, anhydridosilanes, carbamoylsilanes, alkylsilanes or iminosilanes, or oligomeric forms of these silanes, or adducts of primary aminosilanes with epoxysilanes or (meth) acrylsilanes or anhydridosilanes.

Commercial examples of particularly preferred adhesion promoters are Silquest A1100/KH550 (an aminosilane) and Silquest A187/KH 560 (an epoxysilane).

Preferably, the adhesion promoter is present in 0-20%, preferably 1-20%, more preferably 1-10% by weight, based on the total weight of the self-healing coating composition.

### Curing agent (or a curative compound)

The self-healing coating composition preferably includes at least one curing agent, wherein the curing agent is preferably an amine and/or a polyamide, preferably a polyetheramine or a cycloaliphatic amine or a polyamide resin, preferably a polyetheramine.

Suitable examples of the commercially available curative compounds which can be used in the present invention are polyetheramine (Jeffamine D230, Ethermine RC 230, Epocure PEA 230, Baxodur EC301) or cycloaliphatic amine (e.g., Baxodur EC201, Vestamin IPDA, Wanamine IPDA) or polyamide resin (e.g., Jointmide 343, Synpol 160) or a combination thereof.

Preferably, the curing agent is present in 0-80%, preferably 1-60%, more preferably 5-55% by weight, based on the total weight of the self-healing coating composition.

### Curing accelerators

The self-healing coating composition preferably include at least one curing accelerator.

Suitable curing accelerators are substances that accelerate the reaction between amino groups and epoxide groups, more specifically organic carboxylic acids such as acetic acid, benzoic acid, salicylic acid, 2-nitrobenzoic acid, lactic acid, organic sulfonic acids such as methanesulfonic acid, p acid toluenesulfonic or 4-dodecylbenzenesulfonic acid, esters of sulfonic acid, other organic or inorganic acids such as in particular phosphoric acid, or mixtures of the acids and acid esters mentioned above; tertiary amines such as, in particular, 1,4-diazabicyclo [2,2,2] octane, benzyldimethylamine, α-methylbenzyldimethylamine, triethanolamine, dimethylaminopropylamine, imidazoles such as in particular N-methylimidazole, N-vinylimidazole or 1,2-dimethylimidazole, salts of such tertiary amines, quaternary ammonium salts such as, in particular, benzyltrimethylammonium chloride, amidines such as, in particular, 1.8 -diazabicyclo [5.4.0] -undec-7-ene, guanidines such as, in particular, 1,1,3,3-tetramethylguanidine, phenols, especially bisphenols, phenolic resins or Mannich bases such as, in particular, 2-(dimethylaminomethyl) phenol, 2,4,6-tris (dimethylaminomethyl) phenol or polymers of phenol, formaldehyde and N, N-dimethyl-1,3-propanediamine, phosphites such as, in particular, di- or triphenylphosphites, or compounds containing mercapto groups. Preferred curing accelerators are Mannich acids, tertiary amines or bases.

Most preferred is salicylic acid or 2,4,6-tris (dimethylaminomethyl) phenol or a combination thereof.

In a preferred embodiment of the invention, the coating matrix of the present invention is a two-part composition consisting of a resin component and a hardener component.

Particularly preferred as said two-part composition are liquid, two-component epoxy resin compositions, such as those sold under the trade name Sikafloor^{®} P 650, Sika Primer 161, Sikafloor^{®} 1240/1250, Sikagard^{®} 180, Sikagard 1814, Sikagard 1816, Sikagard 1817 Sika UAE LLC, or Sika Germany GmbH, or Sika Switzerland AG

The resin component preferably includes the curable resin, the pigment and the adhesion promoter.

The hardener component preferably includes the curing agent. The hardener component may also include the curing accelerator.

The two components of the coating matrix are each stored in their own container. Further constituents of the coating matrix may be present as part of the resin component or of the hardener component, with further constituents that are reactive toward epoxide groups preferably being part of the hardener component. A suitable container for storing the resin component or the hardener component is, in particular, a drum, a Hobbock, a pouch, a pail, a canister, a cartridge or a tube. The components are storable, meaning that they can be kept for several months up to a year or more before being employed, without suffering alteration in their respective properties to any extent relevant for their use. For the use of the self-healing coating composition, the resin component and the hardener component are mixed with one another shortly before or during application. The mixing ratio between the two components is preferably selected such that the groups of the hardener component that are reactive toward epoxide groups are present in an appropriate ratio to the epoxide groups of the resin component. In terms of parts by weight, the mixing ratio between the resin component and the hardener component is customarily in the range from 70:30 to 60:40.

The two components are mixed by means of suitable method; this may take place continuously or batchwise. If mixing takes place prior to application, it should be ensured that not too much time elapses between the mixing of the components and application, since otherwise there may be disruptions, such as retarded or incomplete development of adhesion to the substrate. Mixing takes place in particular at ambient temperature, which is typically in the range from about 5 to 50°C, preferably at about 10 to 30° C. The mixing of the two components is at the same time the start of curing through chemical reaction, as described above. Curing takes place in particular at ambient temperature. It typically extends over several days to weeks, until it has largely concluded under the prevailing conditions. The duration is dependent on factors including the temperature, the reactivity of the constituents and their stoichiometry, and also the presence of accelerators.

In a particularly preferred embodiment of the invention, the self-healing coating composition is a two-part composition consisting of a resin component and a hardener component, wherein:
a) the resin component preferably comprises:
   - 50-70 wt% of the curable resin, preferably an epoxy resin;
   - 0-20 wt% of the filler;
   - 0.1 - 10 wt% of the pigment;
   - 1-10 wt% of the polyurea microcapsules; and
b) the hardener component preferably comprises:
   - 10-60 wt% of the curing agent, wherein the curing agent is preferably selected from a group consisting of an amine, a polyamide, an amine polysulfide blend, or any combination thereof, wherein the weight percentages are based on the total weight of the self-healing coating composition.

### Process for preparing microcapsule

Fillers and pigments, while essential for enhancing the mechanical properties, durability, and aesthetics of coatings, can pose significant challenges to self-healing functionality. Their presence can interfere with the efficient rupture and release of the healing agent from the microcapsules, limiting its ability to diffuse and repair damage effectively. Moreover, high filler and pigment loading can restrict the mobility of polymer chains, reducing the flexibility necessary for crack closure and self-healing.

To overcome these challenges, careful selection and surface treatment of fillers, as well as optimization of the resin formulation, are crucial. By strategically engineering the formulation, it is possible to achieve a balance between mechanical reinforcement and self-healing capability, making the coatings more durable and effective for applications such as protective concrete coatings.

The self-healing coating compositions of the present invention includes polyurea microcapsules. Preferably, the polyurea microcapsules are obtained by a process comprising the steps of:
a. preparing a mixture of an inorganic porous material impregnated with at least one vegetable oil and an isocyanate in water containing a surfactant;
b. subjecting the mixture of step (a) to mechanical agitation, preferably at a speed of 150-3000 rpm and a temperature of 23-90°C, to form an emulsion.
c. preparing a solution of polyamine in water;
d. adding the solution of step (c) drop wise to the emulsion of step b) under agitation to obtain polyurea microcapsules; and
e. washing, filtering and/or centrifuging the polyurea microcapsules as obtained in step (d) and subjecting them to drying, preferably under vacuum at ambient temperature.

Preferably, the isocyanate is selected from the group consisting of aromatic polyisocyanates, aliphatic polyisocyanates, or mixtures thereof and said aromatic polyisocyanate is selected from the group consisting of 2,4- and 2,6-toluene diisocyanate (TDI), naphthalene diisocyanate, diphenyl methane diisocyanate, triphenyl methane-p,p'p"-trityltriisocyanate, polymethylene polyphenyleneisocyanate, 2,4,4'-diphenylether triisocyanate, 3,3'-dimethyl-4,4'-diphenyl diisocyanate, 3,3'-dimethoxy-4,4'diphenyl diisocyanate, triphenylmethane 4,4', 4" triisocyanate, and mixtures thereof and said aliphatic polyisocyanate is selected from the group consisting of dicyclohexylmethane 4,4'-diisocyanate, hexamethylene1,6-diisocyanate (HMDI), isophoronediisocyanate (IPDI), trimethyl-hexamethylenediisocyanate, trimethylenediisocyanate, propylene-1,2-diisocyanate, butylene1,2-diisocyanate and mixtures thereof.

Preferably, the diisocyanate is an aliphatic diisocyanate, or an aromatic diisocyanate, or a cycloaliphatic diisocyanate, more preferably the diisocyanate is an aromatic diisocyanate, even more preferably toluene diisocyanate (TDI).

Preferably, the aromatic diisocyanate used in the present invention is toluene diisocyanate (TDI). Examples of particularly suitable aromatic diisocyanates include, 4,4'-methylene diphenyl diisocyanate (MDI), 2,4-toluene diisocyanate (2,4-TDI), 2,6-toluene diisocyanate (2,6-TDI), polymethylene polyphenyl isocyanate (PMDI), and naphthalene-1,5-diisocyanate (NDI).

Preferably, the surfactant is selected from the group consisting of at least one of styrenemaleic anhydride block copolymer, arabic gum, polyoxyethylene polyoxypropylene, ethylenediamine polyoxyethylene-polyoxypropylene block polyether, heteroblock polyether, Tween, Span, polyvinyl alcohol, polyethylene glycol, alkylphenol polyoxyethylene ether, fatty alcohol polyoxyethylene ether, and alkyl glycoside. A particularly preferred surfactant is arabic gum.

Preferably, the polyamine comprises at least one member selected from the group consisting of aliphatic polyamines, cycloaliphatic polyamines, heterocyclic polyamines and polyetheramine. Suitable examples include, but are not limited to, ethylene diamine (EDA), diethylene triamine (DETA), triethylene tetramine (TETA), tetraethylene pentamine (TEPA), hexamethylene diamine (HMDA), isophorone diamine (IPDA), menthane diamine (MDA), piperazine, aminoethylpiperazine (AEP), and polyetheramines such as the Jeffamine^{®} series (e.g., Jeffamine D-230, D-400, and T-403).

The polyurea microcapsules are prepared via interfacial polymerization. The process must be optimized to achieve polyurea microcapsules with the desired properties. Without wishing to be bound by any particular theory, it is believed that the conditions under which interfacial polymerization is carried out play a crucial role in determining the properties of the resulting polyurea microcapsules.

The polyurea microcapsules of the present invention are prepared via interfacial polymerisation, characterized in that the mechanical agitation is preferably performed at a speed of 150 -3000 rpm and a temperature of 25-90°C. Preferably, the mechanical agitation is performed at a speed of 200 -2000 rpm, more preferably at 250-1800 rpm, even more preferably at 300-1500 rpm.

The polyurea microcapsules obtained under these conditions exhibit a coarser morphology and have an enhanced capacity to encapsulate a large amount of healing agent. More importantly, they are suitable for use in thick coatings containing high levels of fillers and pigments. These characteristics enable the polyurea microcapsules of the present invention to be effectively utilized in pigmented and/or filler-enriched coatings for concrete.

In yet another aspect, the present invention relates to a coated substrate, characterized in that at least a portion of the said substrate is coated with the self-healing coating composition of the present invention.

Preferably, the substrate is selected from the group consisting of cementitious substrates, concrete, steel, and wood, preferably selected from concrete and steel, and more preferably concrete.

In a preferred embodiment, in order to apply the claimed coating composition of the present invention onto a concrete surface, the concrete surface should be clean and free from dirt, oil, grease, paint, water repellants such as sealers, friable matter and curing compounds.

In a preferred embodiment, prior to applying coating, the substrate is cleaned using high pressure water jetting, grit blasting or other methods known in the art.

In a preferred embodiment, prior to applying a coating composition a primer may also be applied on the concrete surface. Use of primer can significantly enhance the adhesion and performance of the final coating. A primer acts as an intermediary layer that improves the bond between the concrete surface and the subsequent coating. It is especially beneficial when dealing with surfaces that are porous, uneven, or prone to contamination, as it helps to seal the concrete, creating a uniform substrate for the coating to adhere to.

The primer helps to fill in any minor surface imperfections and can also enhance the bonding of the coating by promoting better chemical interaction between the two layers. The application of a primer also aids in preventing the absorption of the coating into the concrete, which can otherwise lead to uneven coverage and reduced coating effectiveness.

Suitable examples of the commercially available primers which can be used in the context of the present invention incudes are Sikafloor^{®} P 650, SikaEmaco P102, Sherwin-Williams' Macropoxy^{®} 920 Pre-Prime, Rust-Oleum^{®} Concrete Saver^{®} Epoxy Primer 608. These primers are well-regarded for their ability to prepare concrete surfaces for the application of epoxy-polysulfide coatings, ensuring long-lasting protection and performance.

Preferably, the coated substrate comprises a coating layer comprising the self-healing coating composition of the present invention, characterized in that the thickness of the coating layer is less than 1000 microns, preferably less than 800 microns, more preferably less than 500 microns.

In a preferred embodiment, the coating composition of the invention is applied on a substrate using an application method selected from spraying, brushing or rolling. Preferably, the coating composition of the present invention is applied to concrete surface by brush.

In another aspect, the present invention relates to a method for self-healing the coated substrate, after it has been damaged, preferably by a scratch or a crack, more preferably by a scratch, characterized in that the method comprises the steps of heating the coated substrate to a temperature from 20°C to 100°C, preferably from 23°C to 80°C, preferably for 15 hours to 10 days, preferably 24 hours to 7 days.

Preferably, the size of the scratch is 20-300 micron, preferably 50-200 micron, more preferably 60-150 micron, even more preferably 70-120 micron.

In yet another aspect, the present invention relates to use of the self-healing coating composition of the present invention to self-repair damages on a surface of the before mentioned coated substrate.

### Examples

Set out below are a number of examples which further illustrate the invention but are in no way intended to restrict the scope of the invention. Unless indicated otherwise, all proportions and percentages are by weight. The examples are merely illustrative and not intended to be construed as limiting application of the present invention.

### Materials & Methods

The following listed raw materials are utilised to obtain the self-healing coating composition of the present invention.

| **Raw Material** | **Source** |
|---|---|
| Fly Ash (DuraPozz) | Ash Resources South Africa |
| Linseed Oil | Hi Tech UAE |
| Sodium Chloride (NaCl) (Lab Grade) | Not specified |
| Triethylene Tetramine (TETA) | Sika MB Construction Chemicals LLC (formerly MBCC) |
| Gum Arabic (GA) | Elnasr Pure and Natural Instant Gum Powder - Amazon |
| Toluene-2,4-diisocyanate (TDI) | Sika MB Construction Chemicals LLC |
| Sikagard (MasterProtect) 180 Base (MP180) | Sika MB Construction Chemicals LLC |
| Sikagard (MasterProtect )180 Hardener (MP180) | Sika MB Construction Chemicals LLC |
| Sikagard 1817 base (SG 1817) | Sika MB Construction Chemicals LLC |
| Sikagard 1817 Hardener (SG 1817) | Sika MB Construction Chemicals LLC |

### Characterization Techniques & Instrumentations:

The following section outline the key instrumentation and characterization methods employed.

To conduct the particle size analysis, a particle size analyser called HELOS (H3681) and RODOS L/L R2 was utilized. The software used for this study was PAQXOS 2.1. The range of the particle size measurement band was from 0.25 µm to 100 µm.

Using an inverted optical microscope from Chennai Metco (Metscope I) with a magnification of one hundred times, the appearance of the microcapsule was captured and self-healing characteristics

A Thermofischer Axia ChemiSEM Low vacuum SEM EDS Scanning Electron Microscope (SEM) was used to study the morphological and structural properties of the Polyurea microcapsules.

The Fourier Transform Infrared Spectroscopy (FTIR), IRAffinity-1S with maximum resolution of 0.5 cm⁻¹, a high SN ratio (30,000:1, 1-minute accumulation, neighbourhood of 2,100cm⁻¹, peak-to-peak) Moreover, the LabSolutions IR software, known for its exceptional performance, from Shimadzu were employed to perform the microcapsule characterization process.

The Differential Scanning Calorimeter (DSC) was used to assess the thermal properties of the microcapsule.

A taber abrasion tester that complied with the standards of ASTM D 4060 (Standard Test Method for Abrasion Resistance of Organic Coatings by the Taber Abraser1 ) was used to measure the abrasion and wear resistance of the coating. The CS17 wheel and a weight of one kilogram were used, and the rotational speed was set to one thousand revolutions per minute.

Colour measurement of different concentration of calcined fly ash (CFA) and microcapsule based coating was carried out using benchtop Datacolor 400TM spectrophotometer manufactured in China.

Contact angle measurement was carried out in Goniometer. Contact angle analyser (Ossila contact angle manufactured in Netherland) was used to measure the hydrophobicity of uncoated substrate and coated substrate. For each measurement, 5 µL of water droplet was put on the surface of the coating and the contact angle was read after 300 s contact with the surface. Additionally, an image of the drop in contact with the desired sample surface was recorded by a digital camera.

### Preparation Procedures:

### Procedure for preparing core material containing calcined fly ash absorbing linseed oil (CFA-oil):

50 g of fly ash was subject to calcination in muffle furnace (Lina High Therm - LM 312.07) at 800 ° C for 10 h to remove unburnt carbon. After calcination fly ash was sieved with 150 mm laboratory sieve to remove coarser particles and 45 mm sieve to remove agglomeration or lumps of calcined fly ash (CFA).

8 g of linseed oil and 8 g of calcined fly ash (CFA) were mixed (manually) and kept in a vacuum desiccator for 5 h at 0.09 mbar and kept for storage till fully impregnation of linseed oil took place in calcined fly ash (CFA). This was confirmed by observing that there is no free linseed oil present in the mixture and calcined fly ash linseed oil (CFA-linseed oil) mixture is ready.

### Process for preparing Polyurea Microcapsule:

Polyurea-CFA-linseed oil microcapsule (MC) was synthesized via interfacial polymerization. 8 g of FA-oil, 4 g toluene diisocynate (TDI) and 100 mL of 2 wt % gum Arabic (GA) aqueous solution as emulsifier mixed well at 1500 rpm for 30 minutes and transferred to another glass flask.

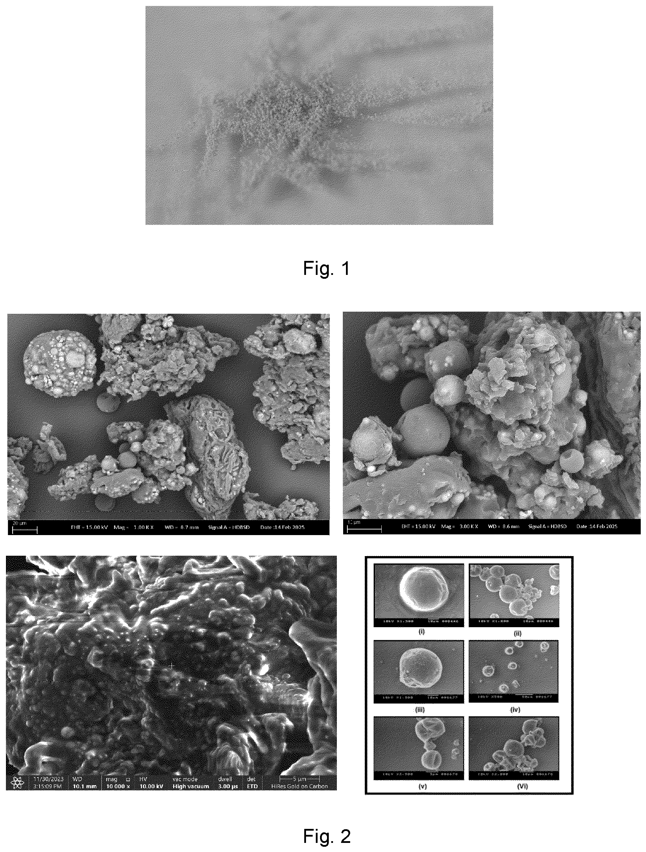

The emulsion is maintained in a water bath at a temperature of 25°C while being mechanically agitated at a speed of 300 rpm. 100 mL of a 2% weight triethylene tetramine (TETA) solution was added slowly and in little amounts over a period of 30 minutes. Subsequently, the temperature of the emulsion was increased to 70°C and maintained for a duration of 5 hours. After the mixture has cooled down, it is filtered using a Whatman 40 filter paper. Figure 1 shows the naturally dried filtered microcapsules in a desiccator.

### Self-Healing Coating composition:

Two types of commercial products have been used to assess the self-healing behavior of coatings: Sikagard (MasterProtect) 180 White and Sikagard (MasterProtect) 1817 Light Grey.

Sikagard (MasterProtect) 180 base white is a commercial product based on Bisphenol A - titanium pigment and silica filler modified coating, while Sikagard (MasterProtect) 180 hardener is a commercial product based on modified polyether amine.

Sikagard (MasterProtect) 1817 base is a commercial coating product composed of bisphenol A, a reactive diluent, and a modified filler blend of titanium oxide, iron oxide, and silica. Meanwhile, the Sikagard (MasterProtect) 1817 hardener is a commercial product formulated with modified polyether amine and liquid polysulfide, which can impact hydrogen bonding within the final coating.

### Concrete Substrate preparation, Coating, Scribing, and Testing:

(i) Substrate preparation:
   A 10 cm x 10 cm specimen of freshly prepared cementitious grout should be cast and cured for one day at room temperature. After this, the specimen should be submerged in water for seven days and then dried thoroughly for 21 days to serve as the substrate. All surfaces must be free of oil, grease, loose materials, and curing compounds (wax-based membranes should not be used in areas to be coated). Concrete surface should be cleaned using high-pressure water jetting, grit blasting, or other methods approved by the engineer to ensure a suitable mechanical bond for optimal adhesion. It is essential that surface preparation is meticulously completed before applying the coating. If required, the concrete substrate is repaired and/or primed to remove any surface imperfections using suitable SikaEmaco or Sikadur repair systems.
(ii) Application of the self-healing coating composition:
   The claimed self-healing coating composition is preferably supplied in two pre-weighed components, resin and hardener. The components are thoroughly mixed using a slow speed drill fitted with a suitable mixing paddle/by hand with spatula until a uniform streak free colour is achieved. The mixing process shall be continued at least for 2 minutes.

The coating composition can be applied onto the substrate using one or more techniques known to the person skilled in the art such as brushing, rolling or spraying airless spray. The dry film thickness (DFT) of the 500 microns is achieved.

The coated substrates were allowed to cure for 7 days prior to subjecting them to scribing tests.

Test samples of coated concrete substrates were prepared using self-healing coatings with varying concentrations of the polyurea microcapsules and calcined fly ash. The composition details of the test samples are as depicted in Table I for experiment 1 and Table 2 for Experiment 2:

**Table - I: Experiments performed with SG(MP) 180 (i.e. Sikagard (MasterProtect) 180)**

| Symbol of coating | MP 180 Base (in g) | MP 180 Hardener (in g) | CFA (in g) | MC (in g) | Total |
|---|---|---|---|---|---|
| STD | 87.00 | 13.00 | 0 | 0 | 100 |
| CFA435 | 82.65 | 13.00 | 4.35 | 0 | 100 |
| CFA870 | 78.30 | 13.00 | 8.70 | 0 | 100 |
| MC435 | 82.65 | 13.00 | 0 | 4.35 | 100 |
| MC870 | 78.30 | 13.00 | 0 | 8.70 | 100 |

**STD:** Standard coating (STD): 87 g of MP 180 base white & 13 g of MP 180 hardener mixed and applied at 500µm wet film thickness via brush on cement board substrate.

**CFA435:** Calcined fly ash coating (CFA435) prepared by dispersing 4.35% by weight CFA in MP 180 base white mixed with MP 180 hardener and applied at 500µm wet film thickness via brush on cement board substrate.

**CFA870:** Calcined fly ash coating (CFA870) prepared by dispersing 8.70% by weight CFA in MP 180 base white mixed with MP 180 hardener and applied at 500µm wet film thickness via brush on cement board substrate.

**MC435:** Microcapsule based smart coating (MC435) prepared by dispersing 4.35% MC in MP 180 white base with MP 180 hardener and applied at 500µm wet film thickness via brush on cement board.

**MC870:** Microcapsule based smart coating (MC870) prepared by dispersing 8.70% MC in MP 180 white base with MP 180 hardener and applied at 500µm wet film thickness via brush on cement board.

**Table - 2: Experiments performed with SG(MP)1817 (i.e. Sikagard (MasterProtect) 1817)**

| Symbol of coating | SG (MP) 1817 Base (in g) | SG (MP) 1817 Hardener (in g) | MC (in g) | Total |
|---|---|---|---|---|
| STD1817 | 100 | 50 | 0 | 150 |
| MC100 | 100 | 50 | 10 | 160 |
| MC200 | 100 | 50 | 20 | 170 |

**STD1817:** SG (MP) 1817 Standard coating (STD1817): 100 g of SG (MP) 1817 light grey base & 50 g of SG (MP) 1817 hardener mixed and applied at 500µm wet film thickness via brush on cement board substrate.

**MC100:** Microcapsule based smart coating (MC100) prepared by dispersing 10% MC in 100 gm SG(MP) 1817 light grey base with 50 gm SG(MP) 1817 hardener mixed and applied at 500µm wet film thickness via brush on cement board substrate.

**MC200:** Microcapsule based smart coating (MC200) prepared by dispersing 20% MC in 100 gm SG (MP) 1817 light grey base with 50gm SG (MP) 1817 hardener and applied at 500µm wet film thickness via brush on cement board substrate.

All above coatings were cured for 7 days at 25°C in laboratory conditions.

**Figure 1** illustrates photographic image of dried filtered polyurea microcapsules encapsulating calcined fly ash absorbing linseed oil (MC).

**Figure 2** illustrates SEM images of polyurea microcapsules encapsulating calcined fly ash absorbing linseed oil (MC).

The SEM images of the polyurea microcapsule (MC) reveal significant details about their morphology and surface characteristics. The images show that the polyurea microcapsules (MC) have a uniform and well-defined structure, with a consistent size distribution across the sample. The surface of the particles appears to be smooth, yet some images may reveal roughness or irregularities.

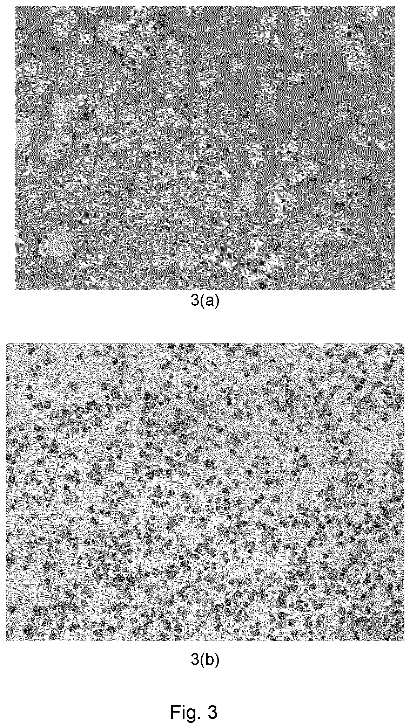

**Figure 3(a)** illustrates optical microscope images of polyurea microcapsules encapsulating calcined fly ash absorbing linseed oil (MC) prepared as per the present invention (i.e. with slow mechanical agitation or lower speed).

**Figure 3(b)** illustrates optical microscope images of polyurea microcapsules encapsulating calcined fly ash absorbing linseed oil prepared not according to present invention (i.e. with fast mechanical agitation or higher speed).

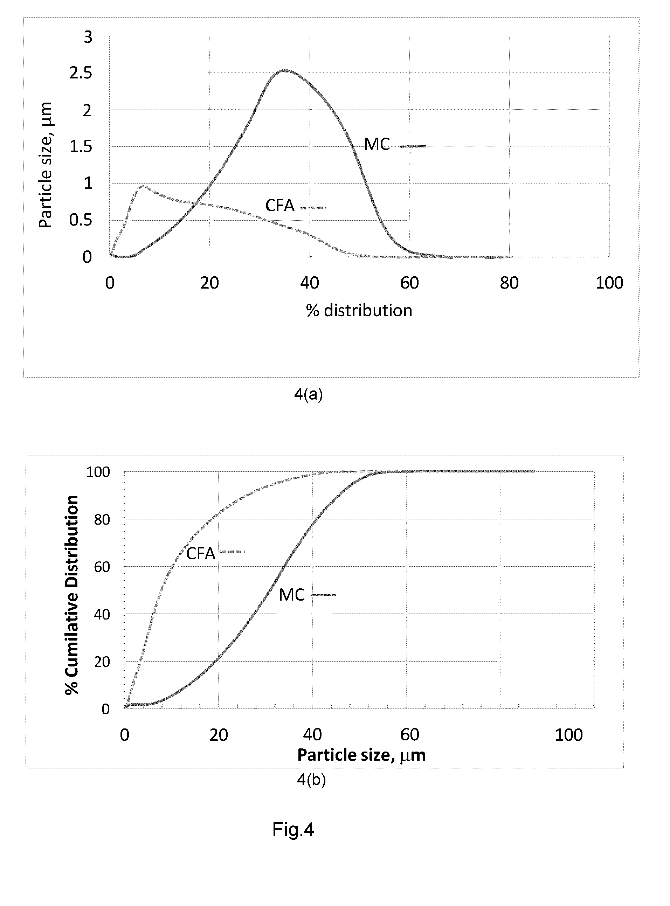

**Figure 4(a)** illustrate particles size distribution of calcined fly ash (CFA) and polyurea microcapsules encapsulating calcined fly ash absorbing linseed oil (MC).

The particle size analysis of CFA and MC (Figure 4(a) and Figure 4(b)) was conducted using HELOS (H3681) & RODOSL/L R2, with PAQXOS 2.1 software.

The particle size distribution of MC revealing a prominent peak which indicates a narrow size range, with most particles around 2.5 µm. In contrast, the gradual peak observed in particle size distribution of CFA suggests a wider range of particle sizes, with a significant portion of particles measuring less than 1 µm. Understanding particle size distribution is crucial in coating formulation, as it directly impacts material characteristics and mechanical properties.

**Figure 4(b)** illustrates cumulative particles size analysis of calcined fly ash (CFA) and polyurea microcapsules encapsulating calcined fly ash absorbing linseed oil (MC).

The CFA curve begins at the lower left corner and rises sharply, approaching nearly 100% cumulative distribution at approximately 40 µm, indicating that the majority of CFA particles are smaller than this size. Similarly, the **MC** curve also starts from the lower left corner but ascends more gradually compared to CFA. A particle size of around 80 µm results in a cumulative distribution that approaches or equals 100%.

This suggests that the size distribution is wider with larger particles in comparison to CFA. CFA: The vertical ascent and initial stabilization suggest a limited range of particle sizes, with the majority being somewhat little.

The steady ascent and subsequent stabilization of **MC** indicate a broader range of sizes, including increasingly larger particles. A comprehensive grasp of these distributions is essential in applications where the size of particles impacts the characteristics of materials, such as in construction materials, and coatings.

**Table 2: Particle Size analysis of CFA and MC**

| Average Particle size | CFA | **MC** |
|---|---|---|
| 45µm | 99% | 88% |
| 32µm | 87% | 53% |
| 3µm | 18-19% | 1.6-1.7% |
| Surface area cm2/g | 4760-5060 | 1602 |

The table 2 presents statistics regarding the particle size and surface area of CFA. The mean particle size of the CFA obtained at a size of 45µm was determined to be 99% once encapsulation reached 88%. These findings indicate that around 11% of the CFA particles were covered with a coating. Concurrently, the proportion of CFA particles measuring 3µm in size declined from 18-19% to 1.6-1.7%, suggesting that around 16-17% of the particles were covered with a coating.

The surface area of CFA is considerably greater (4760-5060 cm²/g) than that of MC (1602 cm²/g). These findings align with the tighter particle size distribution of CFA, since smaller particles often exhibit a greater surface area and MC particles are coarser in nature indicates encapsulation of CFA.

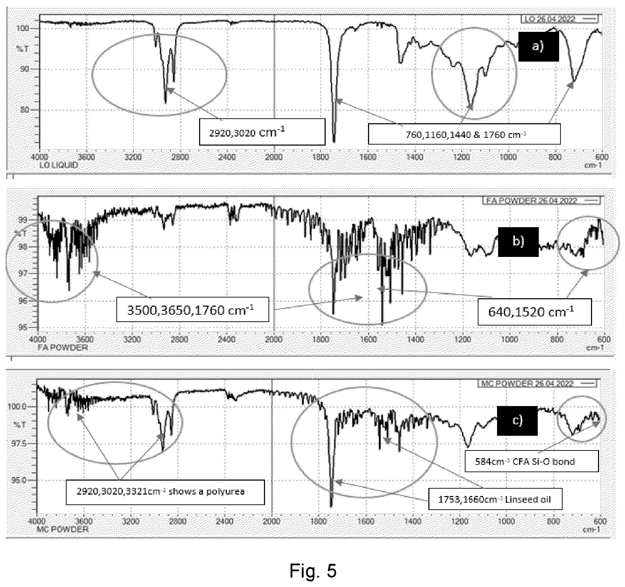

**Figure 5** illustrates FTIR spectra of a) linseed oil, b) calcined fly ash (CFA), and c) polyurea microcapsules encapsulating calcined fly ash absorbing linseed oil (MC)

The FTIR spectra of linseed oil is depicted in Figure 5 (a). The absorption peaks at 760 cm⁻¹, 1160 cm⁻¹, 1440 cm⁻¹, 1760 cm⁻¹, 2860 cm⁻¹ & 2940 cm⁻¹ which is reflecting stronger peak at 2860 cm⁻¹ and 2940 cm⁻¹ correspond to the bending and stretching vibrations of unsaturation in linseed oil.

The absorption peaks at 640 cm⁻¹, 1000 cm⁻¹, 1500 cm⁻¹ &1800 cm⁻¹ in Figure 5(b) represent CFA.

The absorption peaks at 760 cm⁻¹, 1160 cm⁻¹, 1440 cm⁻¹, 1760 cm⁻¹, 2920 cm⁻¹ & 3020 cm⁻¹ in Figure 5(c) corresponds linseed oil in MC.

The strong absorption peaks at 2932 cm⁻¹ and 2858 cm⁻¹ corresponded to the CH stretches of the - CH2- and -CH3 groups. The other peaks at 1753 cm-1 and 1660 cm-1 were attributed to the - CO, -C = C- vibrations of unsaturated fatty acid in the linseed oil respectively.

The absorption peak of linseed oil and MC in superimpose spectra indicate presence of linseed oil in MC.

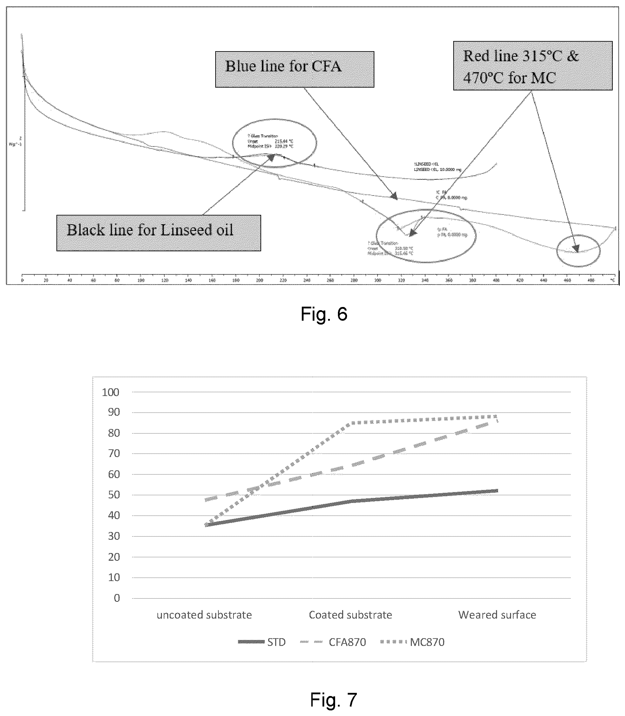

**Figure 6** illustrates differential scanning calorimetry (DSC) analysis of a) linseed oil, b) calcined fly ash (CFA), and c) polyurea microcapsules encapsulating calcined fly ash absorbing linseed oil (MC).

The phase change of MC was analyzed using DSC and compared with pure linseed oil and CFA. As shown in Figure 6, linseed oil exhibited a phase change at 220°C. MC displayed phase transitions at 315°C and 470°C, as indicated by the shoulder peaks, whereas CFA remained unchanged.

**Figure 7** illustrates contact angle of coating samples (a) STD, b) CFA 870 and c) MC 870.

Contact angle was evaluated using a Goniometer for three types of substrate (uncoated, coated, and after wear test) and three coating compositions standard coating (STD), 8.7% Calcined fly ash-based coating (CFA870), and 8.7% microcapsule-based coating (MC870).

**Table 3: Goniometer Results**

| Sr. No | Test Sample | Contact Angle | | |
|---|---|---|---|---|
| | | Uncoated substrate | Coated substrate | Weared surface |
| 1 | STD | 35.24 | 46.85 | 52.09 |
| 2 | CFA870 | 47.5 | 64.15 | 85.86 |
| 3 | MC870 | 35.24 | 84.86 | 88 |

The contact angle data presented in table 3 and Figure 7 demonstrate that the hydrophobicity of the substrate coated with CFA870 and MC870 have been enhanced. The greatest improvement is seen in the coating based on MC870, even after the substrate has been extensively worn.

### Color variations Studies:

The color variations of the coating compositions CFA435, CFA870, MC435, and MC870 were analyzed, with ΔE values measured using a data color spectrophotometer.

Table 4 depicts the ΔE values of CFA435, CFA870, MC435 and MC870 based coating composition.

**Table 4 ΔE measurements of coatings applied via data color spectrophotometer**

| S. No | Coatings | ΔE Values | Remarks |
|---|---|---|---|
| 1 | CFA435 | 2.82 | No major shift in colour appearance |
| 2 | MC435 | 2.8 | |
| 3 | CFA870 | 4.17 | |
| 4 | MC870 | 3.8 | |

It was observed that incorporating CFA435, CFA870, MC435, and MC870 caused the epoxy white-pigmented films to take on a slightly yellowish tint compared to pure white. However, CFA435 and MC435 did not exhibit a significant shift in ΔE values when compared to the white coatings.

### Mechanical Test Results:

### a) Self-healing tests

The test samples of concrete substrates prepared using the epoxy based coatings (i.e. MC870, MC430, CFA870 and STD) and epoxy-sulphide based coatings (i.e. STD1817, MC100 & MC200) were subjected to scribing tests. The scribes are typically created as part of a testing procedure to evaluate the self-healing performance of the coating.

Each sample of the coated concrete substrate was damaged using a razor blade. The scribes on the coated concrete samples were of the size of 100 microns, which refers to the width or depth of the intentional scratches or grooves made on the surface.

The scratched area was heated at 80°C for 24 h to accelerate crosslinking by healing agent (i.e. linseed oil), forming new film to repair the scribed area. The test samples have been kept in oven at 80°C for 24h to visualise crack healing.

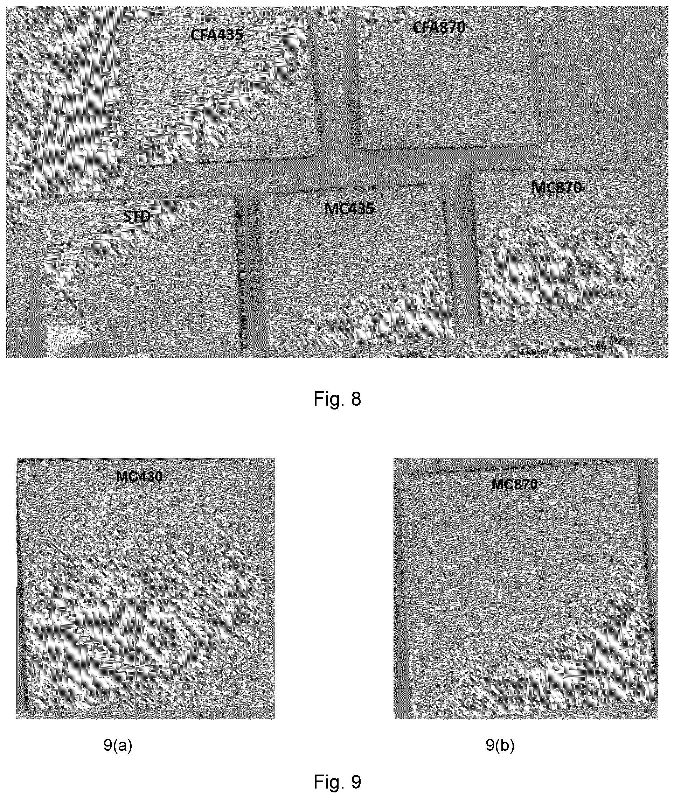

The resulting panels were then photographed to document evidence of healing in the coated concrete samples. The results of which are showcased in **Figure 8-12****.**

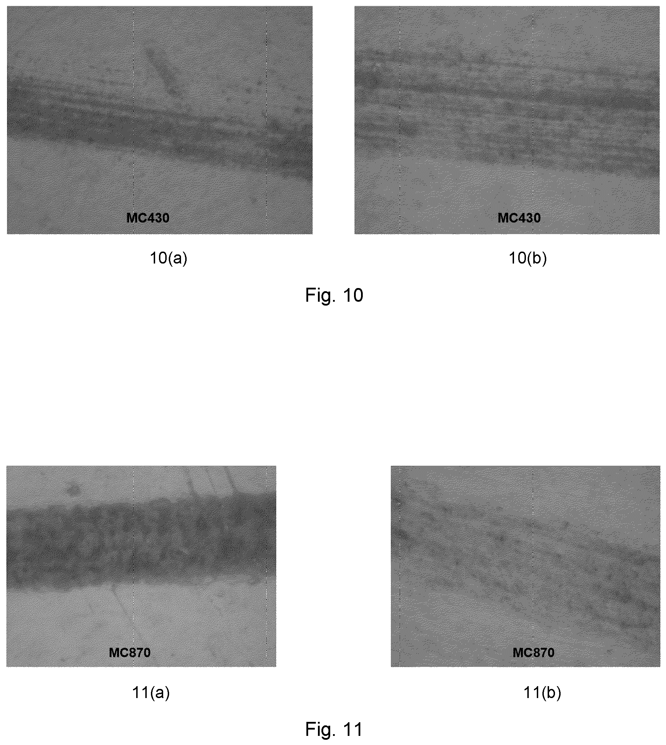

Test sample with MC430 coating has been observed crack healing in optical microscope with 100X magnifying lens. The results of which are showcased in **Figure 10****.**

Test sample with MC870 coating has been observed crack healing in optical microscope with 100X magnifying lens. The results of which are showcased in **Figure 11****.**

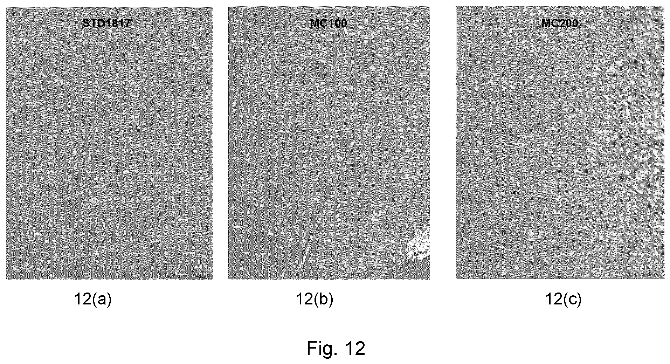

The photographic images of self-healed test samples with STD1817, MC100, MC200 coating has been showcased in **Figure 12****.**

### b) Wear Resistance tests

The wear resistance of the coated substrate was assessed using ASTM D4060, which is the

Standard Test Method for Measurement of Abrasion Resistance of Organic Coatings using the Taber Abraser1. Each coated substrate was subjected to a CS17 wheel and a 1kg mass was distributed during a 1000 rpm abrasion process.

Taber Wear Index - Indicates rate of wear and is calculated by measuring the loss in weight (in milligrams) per thousand cycles of abrasion. The lower the wear index, the better the abrasion resistance. $I = \left[\left(A-B\right)*1000\right] / C$
where I = wear index
A = weight (mass) of specimen before abrasion
B = weight (mass) of specimen after abrasion
C = number of test cycles

Weight (Mass) Loss - This technique measures how much material has been removed by abrasion and is usually reported in milligrams. $L = A - B$
where L = weight loss
A = weight (mass) of specimen before abrasion
B = weight (mass) of specimen after abrasion

The mass loss in milligrams was recorded and the wear index (I)was determined as indicated in table 5 and Figure 12.

**Table 5: Results of the Wear test**

| Coatings | Initial weight Ain gm | Final weight B in gm | Weight loss L=(A-B)*1000 in mg | Wear index I =(A-B)*1000/C | % wear index improvement over STD |
|---|---|---|---|---|---|
| STD | 172.05 | 171.964 | 86 | 0.086 | |
| CFA435 | 177.568 | 177.545 | 23 | 0.023 | 73.26 |
| MC435 | 169.308 | 169.3 | 8 | 0.008 | 90.70 |
| CFA870 | 186.12 | 186.099 | 21 | 0.021 | 75.58 |
| MC870 | 181.346 | 181.302 | 44 | 0.044 | 48.84 |

Table 5 shows wear index has been 90.7% & 48.8% improved in MC435 & MC870 based coating whereas 73% & 75.5% improved in CFA435 and CFA870 in comparison to STD coating.

In conclusion, pigmented smart sustainable self-healing coatings based on polyurea microcapsules encapsulating calcined fly ash impregnating linseed oil have been synthesized using interfacial polymerization. The inventive coatings of the present invention exhibit exceptional thermal stability, possess ability to self-heal, hydrophobicity and excellent wear /abrasion resistance. These coatings combined wear resistance, hydrophobicity, and self-healing properties, utilizing sustainable ingredients like fly ash and linseed oil. It was observed that the coatings demonstrated self-repairing abilities and hydrophobic properties, with MC870 (8.70% of MC) and MC435 (4.35% of MC) showing the highest wear resistance.

## Claims

1. A self-healing coating composition, comprising:
a. polyurea microcapsules, wherein the polyurea microcapsule comprises:
i. a core comprising an inorganic porous material impregnated with at least one healing agent, wherein the healing agent comprises at least one vegetable oil, preferably linseed oil; and
ii. a polyurea shell encapsulating the core material; and
b. a coating matrix embedding the polyurea microcapsule, wherein the coating matrix comprises at least one curable resin and wherein the coating matrix is pigmented.

2. The self-healing coating composition as claimed in claim 1, **characterized in that** the self-healing coating composition further comprises one or more materials selected from the group consisting of a curing agent, an additive, an adhesion promoter, and an accelerator.

3. The self-healing coating composition as claimed in any of the preceding claims, **characterized in that** the inorganic porous material is fly-ash, preferably calcined fly-ash.

4. The self-healing coating composition as claimed in any of the preceding claims, **characterized in that** the vegetable oil is selected from the group consisting of linseed oil, soybean oil, castor oil, tung oil, cottonseed oil, safflower oil, sunflower oil, corn oil, peanut oil, canola oil, coconut oil, palm oil, olive oil and rapeseed oil, preferably linseed oil.

5. The self-healing coating composition as claimed in any of the preceding claims, **characterized in that** the weight percentage of the polyurea microcapsules with respect to the total weight of the self-healing coating composition is about 0.1-50%, preferably 0.5-35%, more preferably 1-20%, even more preferably 3-10%.

6. The self-healing coating composition as claimed in any of the preceding claims, **characterized in that** the polyurea microcapsules has mean particle size in the range in the range of 0.1-100 microns, preferably 5-85 microns, more preferably 1-30 microns, wherein the mean particle size is preferably determined by laser diffractometry.

7. The self-healing coating composition as claimed in any of the preceding claims, **characterized in that** the curable resin is selected from the group consisting of an epoxy resin, a polysulphide resin, an epoxy-polysulphide resin, an acrylic resin, a phenolic resin, a polyurethane resin, an alkyd resin and a polyester resin, preferably selected from an epoxy resin and an epoxy-polysulphide resin.

8. The self-healing coating composition as claimed in any of the preceding claims, **characterized in that** the self-healing coating composition is a two-part composition consisting of a resin component and a hardener component, wherein:
a) the resin component preferably comprises:
- 50-70 wt% of the curable resin, preferably an epoxy resin or an epoxy-polysulfide resin;
- 0-20 wt% of a filler;
- 0.1 - 10 wt% of a pigment.
- 1-10 wt% of the polyurea microcapsules; and
b) the hardener component preferably comprises:
- 10-60 wt% of a curing agent, wherein the curing agent is preferably selected from the group consisting of an amine, a polyamide, an amine polysulfide blend, or any combination thereof, and wherein the weight percentages are based on the total weight of the self-healing coating composition.

9. The self-healing coating composition as claimed in any of the preceding claims, **characterized in that** the polyurea microcapsules are obtained by a process comprising the steps of:
a. preparing a mixture of an inorganic porous material impregnated with at least one vegetable oil and an isocyanate in water containing a surfactant;
b. subjecting the mixture of step (a) to mechanical agitation, preferably at a speed of 150-3000 rpm and a temperature of 23-90°C, to form an emulsion;
c. preparing a solution of polyamine in water.
d. adding the solution of step (c) drop wise to the emulsion of step b) under agitation to obtain polyurea microcapsules;
e. filtering and/or centrifuging the polyurea microcapsules as obtained in step (d) and subjecting them to drying, preferably under vacuum at ambient temperature.

10. A coated substrate, **characterized in that** at least a portion of the said substrate is coated with the self-healing coating composition of any of the preceding claims.

11. The coated substrate as claimed in claim 10, **characterized in that** the substrate is selected from the group consisting of cementitious substrates, concrete, steel, and wood, preferably selected from concrete and steel, and more preferably concrete.

12. The coated substrate as claimed in claims 10-11, wherein the coated substrate comprises a coating layer comprising the self-healing coating composition of and of claim 1-9, **characterized in that** the thickness of the coating layer is less than 1000 microns, preferably less than 800 microns, more preferably less than 500 microns.

13. A method for self-healing the coated substrate as claimed in claims 10-12, after it has been damaged, preferably by a scratch or a crack, more preferably by a scratch, **characterized in that** the method comprises the steps of heating the coated substrate to a temperature from 20°C to 100°C, preferably from 50°C to 90°C, preferably for 15 hours to 10 days, preferably 24 hours to 7 days.

14. The method for self-healing the coated substrate as claimed in claim 13, **characterized in that** the size of the scratch is 20-300 micron, preferably 50-200 micron, more preferably 60-150 micron, even more preferably 70-120 micron.

15. Use of the self-healing coating composition of claim 1-10 to self-repair damages on a surface of the coated substrate according to any of the claims 10-12.
